# EUROPEAN PATENT SPECIFICATION

(11) **EP 1 887 483 B1**
(45) Date of publication and mention of the grant of the patent: **21.09.2011**
(21) Application number: 07017021.2
(22) Date of filing: 30.11.2000
(51) Int. Cl.: G06F 17/30

(54) **Dynamic content based assisted information browsing**
Unterstützte Informationssuche auf der Basis dynamischen Inhalts
Navigation d'information assistée basée sur un contenu dynamique

(30) Priority: 30.11.1999 US 452328
(43) Date of publication of application: 13.02.2008
(62) Divisional of application: 00982330.3
(73) Proprietor: Hall Aluminum LLC, Los Altos, CA 94022 (US)
(72) Inventor: Porter, Swain W., Kirkland Washington 98034 (US)
(74) Representative: Small, Gary James

(56) References cited:
- EP-A- 0 943 982
- L.LEE GILES, KURT D. BOLLACKER, STEVE LAWRENCE: "CiteSeer: An Automatic Citation Indexing System" DIGITAL LIBRARIES 98 - THIRD ACM CONFERENCE ON DIGITAL LIBRARIES, EDITED BY I. WITTEN, R. AKSCYN, F.SHIPMAN III, ACM PRESS, [Online] 1998, pages 89-98, XP002258918 New York Retrieved from the Internet: URL:http://citeseer.nj.nec.com/cs> [retrieved on 2003-10-23]
- BOLLACKER K D ET AL: "CITESEER: AN AUTONOMOUS WEB AGENT FOR AUTOMATIC RETRIEVAL AND IDENTIFICATION OF INTERESTING PUBLICATIONS" PROCEEDINGS OF THE 2ND INTERNATIONAL CONFERENCE ON AUTONOMOUS AGENTS MINNEAPOLIS/ST.PAUL, MN, MAY 9 - 13, 1998, PROCEEDINGS OF THE INTERNATIONAL CONFERENCE ON AUTONOMOUS AGENTS, NEW YORK, NY: ACM, US, 9 May 1998 (1998-05-09), pages 116-123, XP000887406 ISBN: 0-89791-983-1

## Description

### BACKGROUND OF THE INVENTION

### 1. Field of the Invention

The present invention relates to the field of computerized information retrieval and browsing. More specifically, the present invention relates to methods and apparatuses associated with dynamic content based assistance provided to facilitate information retrieval and browsing.

### 2. Background Information

With the recent advances in microprocessor, telecommunication and networking technology, increasing number of computer systems are being networked together through private and public networks, such as the Internet. Volumes of information stored on information servers (such as web servers of the World Wide Web) are now available to users of computer systems with a few clicks of a mouse button. For many users, the ease of access has actually created an information overload situation. Early solution has been to categorize as much of the information available as possible, such as the directory or index services offered by Internet portals like Yahoo and Lycos. Even then, a simple search restricted to one categorization could still result in hundreds of potential hits, requiring a large amount of user time to sort out the useless from the useful. As a result, users are frustrated, and information technology are prevented from realizing its full potential in reaching the ubiquitous state.

Various automated techniques in assisting a user in retrieving and browsing information have been proposed and/or experimented. In U.S. Patent 5,727,129, entitled "Network system for profiling and actively facilitating user activities", issued to Barrett et al, a system and method for assisting a user in accessing information stored at remote network sites was disclosed. Under Barrett, an archive is maintained of remote sites accessed and instances in which the same remote sites are accessed in sequence. Statistics regarding information such as the number of times a site has been accessed, and the times a given set of sites have been accessed in sequence are maintained. Based on this information, information items are identified which the user is predicted to be likely to want to access. In U.S. Patent 5,960,429, entitled "Multiple reference hotlist for identifying frequently retrieved web pages", issued to Peercy et al, a method and apparatus for locating web pages was disclosed. Under Peercy, a count of retrievals of a web page is accumulated and the accumulated count and an address for the web page are stored in a record of a history log database. A multiple reference hotlist is formatted for the user from the records in the history log. The document from L.Lee GILES, Kurt D. Bollacket, Steve Lawrence "CiteSeer: An Automatic Citation Indexing System", 1998, pages 89-98 discloses an automatic citation indexing system. For instance, this automatic citation indexing system can retrieve all documents cited in a given paper. The other way round, it may provide a list of papers that cite the given paper. Accordingly, browsing indexes of academic literature in electronic format will be supported. Further, CiteSeer may find related documents to a given document. The sources of said related documents are dynamically assembled and additionally displayed on a display of a client system. In order to find these related documents, a method is disclosed using knowledge about document components or structures, for instance the citation information. Each of these prior art techniques has its pros and cons. Thus, additional techniques that can further improve the ease of information retrieval and browsing, even in limited circumstances, are desired.

### SUMMARY OF THE INVENTION

An automated method including automatic provision of additional display of a number of identifiers identifying information sources for assisting a user of the client system in retrieving and browsing information is disclosed. Under the method, in response to the retrieval and display on a display of a client system a first information page responsive to user direction, the additional display is provided. The information source identifiers are dynamically assembled, based at least in part on the content of said first information page. In one embodiment, a thumbnail corresponding to the information page identified by an information page identifier is also provided responsive to a user event.

### BRIEF DESCRIPTION OF DRAWINGS

The present invention will be described by way of exemplary embodiments, but not limitations, illustrated in the accompanying drawings in which like references denote similar elements, and in which:
**Figure 1** illustrates an overview of the present invention;
**Figure 2** illustrates the browser and the augmented dynamic content based assistance functions and databases of **Fig. 1** in further detail in accordance with one embodiment;
**Figures 3a-3b** illustrate one embodiment each of the related keyword database and related information source database of **Fig. 2****;**
**Figure 4** illustrates a manner for designating a current table pair, in accordance with one embodiment;
**Figure 5** illustrates a method of the present invention in accordance with one embodiment;
**Figures 6a-6d** illustrate four network embodiments for practicing the present invention in accordance with four embodiments; and
**Figure 7** illustrates an example digital system suitable for practicing the present invention.

### DETAILECI DESCRIPTION OF THE INVENTION

In the following description, various aspects of the present invention will be described. However, it will be apparent to those skilled in the art that the present invention may be practiced with only some or all aspects of the present invention. For purposes of explanation, specific numbers, materials and configurations are set forth in order to provide a thorough understanding of the present invention. However, it will also be apparent to one skilled in the art that the present invention may be practiced without the specific details. In other instances, well known features are omitted or simplified in order not to obscure the present invention.

Parts of the description will be presented using terms such as tables, keys, identifiers and so forth, commonly employed by those skilled in the art to convey the substance of their work to others skilled in the art. Parts of the description will be presented in terms of operations performed by a computer system, using terms such as parsing, accessing, retrieving, and so forth. As well understood by those skilled in the art, these quantities take the form of electrical, magnetic, or optical signals capable of being stored, transferred, combined, and otherwise manipulated through mechanical and electrical components of a digital system; and the term digital system include general purpose as well as special purpose data processing machines, systems, and the like, that are standalone, adjunct or embedded.

Various operations will be described as multiple discrete steps performed in turn in a manner that is most helpful in understanding the present invention, however, the order of description should not be construed as to imply that these operations are necessarily order dependent, in particular, the order the operations are presented. Furthermore, the phrase "in one embodiment° will be used repeatedly, however the phrase does not necessarily refer to the same embodiment, although it may.

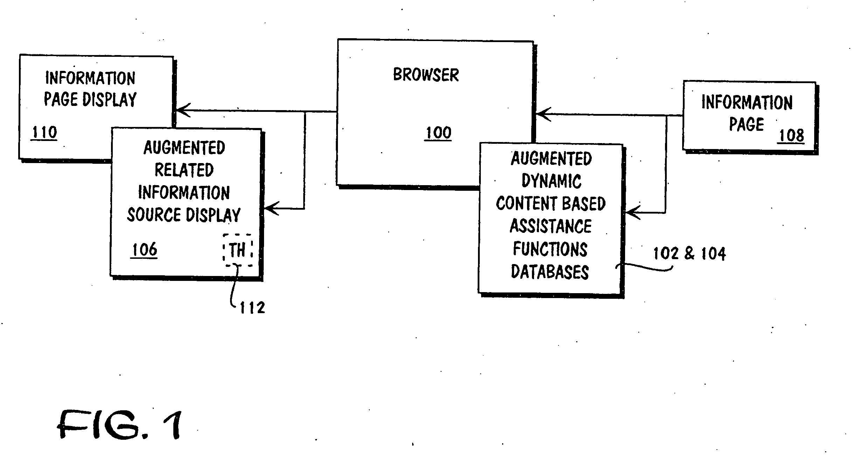

Referring now to **Figure 1**, wherein an overview of the present invention is shown. As illustrated, in accordance with the present invention, browser **100** is augmented with a number of functions **102** and databases **104** to provide dynamic content based assistance to a user to retrieve and browse information pages. More specifically, functions **102** and databases **104** enable browser **100** to facilitate augmented provision of a number of dynamically assembled other information source identifiers **106** based at least in part on dynamically determined contents of information page **108.** (The display of information page **108** is illustrated as information page display 110.) Information page **108** is intended to represent a broad range of informational units known in the art, including but not limited to information "documents" formed using mark-up languages, such as HTML and XML. In one embodiment, functions 102 further enable browser **100** to provide thumbnails **112** of information pages corresponding to provided information source identifiers **108.** A thumbnail of an information page, as described in more detail below, is a dithered down image of the information page. Thumbnails **112** are provided to enable the user to have a rough overview of what the information page is about. In one embodiment, a thumbnail is provided in response to a user event, such as when a user proximately placing a cursor "next" to an information source identifier. What constitutes "proximately placed" is application dependent.

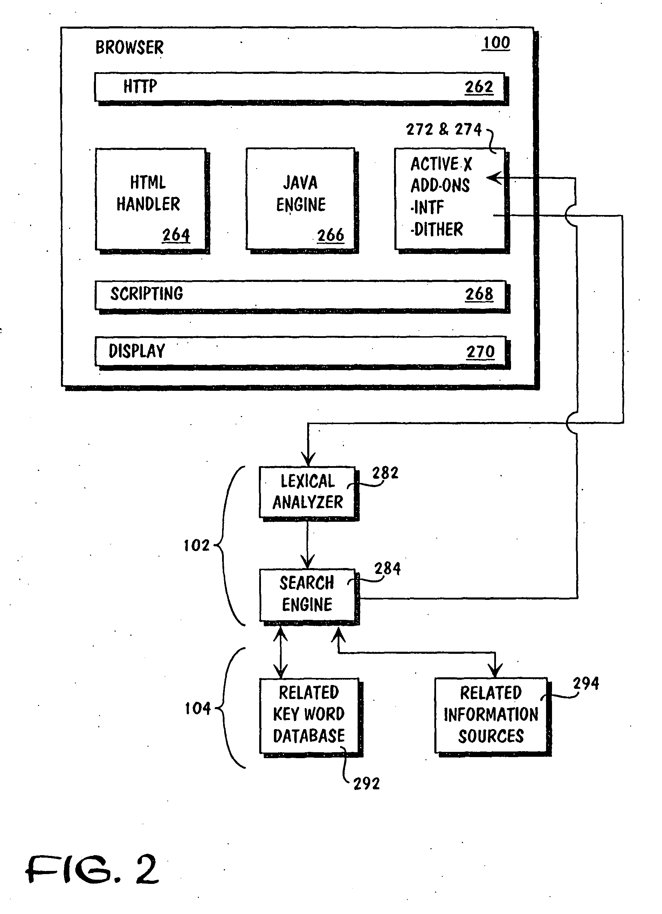

**Figure 2** illustrates browser **100** as well as augmented functions **102** and databases **104** in further detail, in accordance with one embodiment. As illustrated, browser **100** includes conventional elements found in many browsers known in the art, HTTP interface **262,** HTML web page handler **264,** JAVA^{™} and JavaScript execution engine **266,** other script interpreter **268** (e.g. CGI), display interface **270,** and a number of "plug-ins" (or add-ons), shown as additional Active-X components **272-274.** Included among these Active-X. components **272-274** is a component **272** that interfaces with selected ones of augmented functions **102,** and a dithering module **274.** Augmented functions **102** include lexical analyzer **282** and search engine **284,** and augmented databases **104** include related keyword database **292** and related information sources database **294.**

Lexical analyzer **282,** for the illustrated embodiment, is used to determine in real time, unique nouns presence in the information page browsed. In alternate embodiments, lexical analyzer **282** may be used to determine presence of other types of words/terms presence in the information page, e.g. words/terms that are specially tagged.

Search engine **284** is used to determine in real time, presence of certain keywords in the information page being browsed, for the illustrated embodiment, using unique nouns outputs by lexical analyzer **282**. More specifically, search engine **284** uses the unique nouns to access related keyword database **292** to determine if any of the unique nouns are keywords of interest. Search engine **284** is additionally used to determine in real time, related keywords for the presence ones of the keywords of interest in the information page being browsed. For the illustrated embodiment, search engine **284** makes the determination by retrieving the related keywords stored in related keyword database **292** for a keyword of interest, when a unique noun matches the keyword of interest. Search engine **284** is further used to determine in real time, the information source identifiers to be provided in view of the determined related keywords. For the illustrated embodiment, search engine **284** makes the determination by retrieving the information source identifiers from database **294** using the determined related keywords.

Lastly, as described earlier, add-on dithering module **274** is used to dither a retrieved one of the information pages identified by the augmented information source identifiers, to generate a thumbnail for the information page. In one embodiment, both the retrieval and dithering of the information page are performed when the thumbnail is needed. In another embodiment, the information page is pre-fetched, and the dithering is performed when the thumbnail is needed. In yet another embodiment, the information page is pre-fetched and the dithering is performed in advance before the thumbnail is needed.

Except for the role they play to collectively facilitate practice of the present invention, in and of the themselves, each of the enumerated functions, interface **272,** dithering module **274,** lexical analyzer **282,** and searching engine **284** are generally known in the art, and may be implemented using any one of a number of techniques and programming languages known. Accordingly, they will not be otherwise further described.

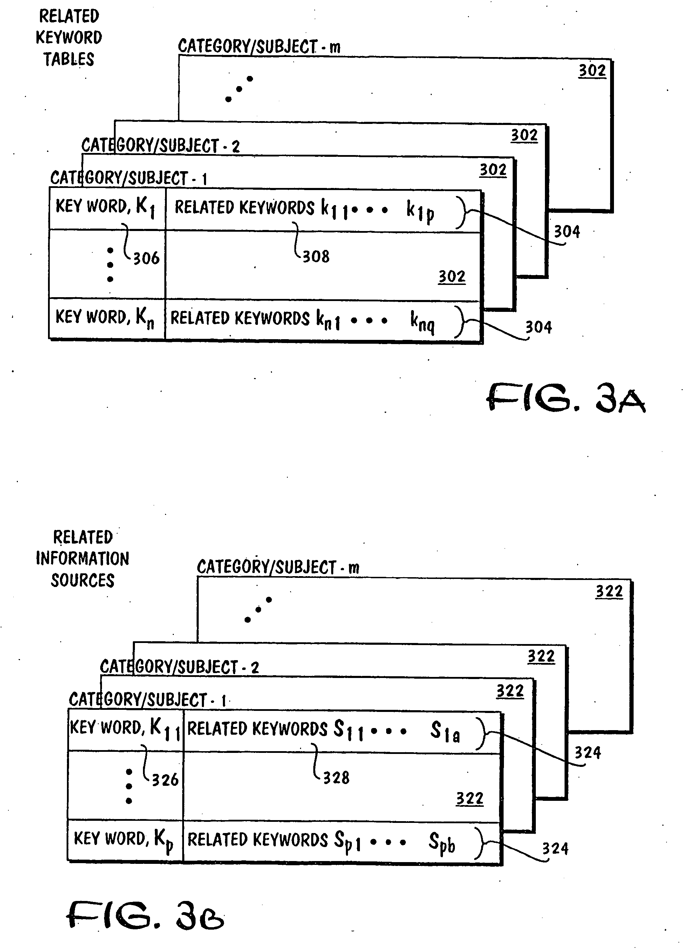

Figures **3a-3b** illustrate one embodiment each of related keyword database **292** and information source database **294.** For the illustrated embodiment, related keyword database **292,** as shown in **Fig. 3a****,** is constituted with a number of tables **302.** Stored inside each table **302** are related keyword entries **304.** Each related keyword entry **304** includes related keywords **308** for a keyword of interest **306.** Similarly, for the illustrated embodiment, information source database **294,** as shown in **Fig. 3b****,** is constituted with a number of tables **322.** Stored inside each table **322** are information source entries **324.** Each information source entry **324** includes information source identifiers **328** for a related keyword **308.**

For the illustrated embodiment, keywords of interest **306** (and therefore, their related keywords 308 and associated information source identifiers **328**) are organized by categories or subjects. For examples, a series of tables may contain related keywords for various keywords of interest for Biology, Physics, Chemistry, History, Literature, and so forth; another series of tables may contain related keywords for various keywords of interest for Doctors, Dentists, Lawyers, Accountants, Financial Advisers, and so forth, and yet another series of tables may contain related keywords for various keywords of interest for Classical Music, Rock and Roll Music, Country Western Music, and so forth. There is no limitation to how the tables may be organized.

For the illustrated embodiment, one of the corresponding table pairs **302** and **322** is designated as the "current" table pair. During operation, search engine **284** accesses only table **302** of the designated "current" table pair to determine whether certain keywords of interest are presence in an information page being browsed. The associated information source identifiers for each determined presence ones of keywords of interest are retrieved from the corresponding information source table **322** of the designated "current" table pair.

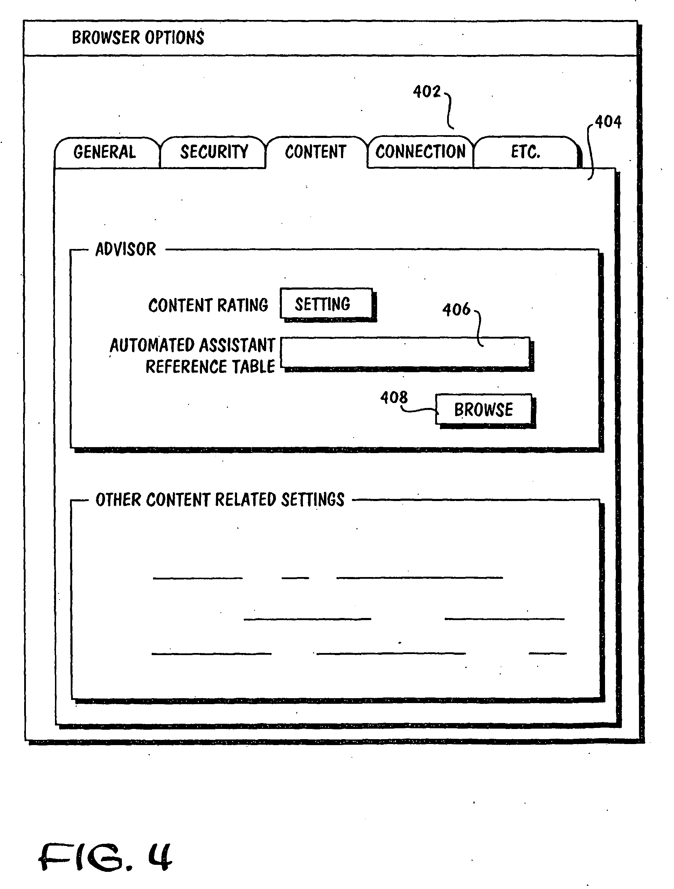

**Figure 4** illustrates a manner in which the "current" table pair may be designated, in accordance with one embodiment. The manner illustrated is similar to the "tab" based pop-up approach in setting browser or software options in general. For the illustrated embodiment, option "pop up" **402** includes tab page **404** for setting various content related options. Among the various settable content related options is field **406** for entering the name of the keyword of interest and information source table pair to be designated as the "current" table pair. Field **406** has associated browse button **408** for displaying a list of table-pairs available for selection. The approach is basically known in the art, accordingly, will not be otherwise further described.

The information contained in the various tables may be tabulated manually or using an automated process or a combination of both, by a vendor. The tabulation may be repeated periodically to continually refine the keywords of interest, their relationship to other keywords, as well as the associated information sources.

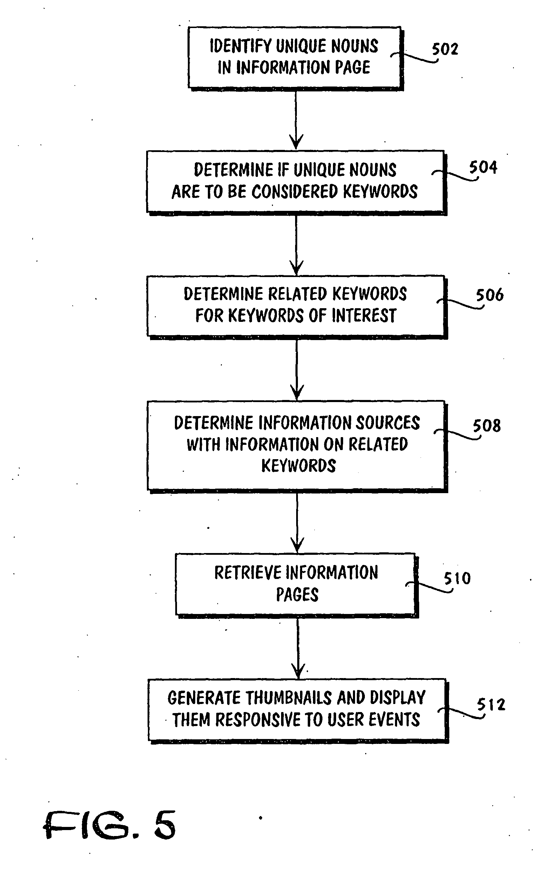

**Figure 5** illustrates a method of the present invention, in accordance with one embodiment. As illustrated, at **502,** unique nouns of an information page are identified. In the earlier described embodiment, the identification is performed by the lexical analyzer. At **504,** the unique nouns are determined if they are to be considered as keywords of interest. In the earlier described embodiment, this is performed by the search engine accessing the related keyword database. At **506,** the related keywords are determined for the presence ones of the keywords of interest. In the earlier described embodiment, this is also performed by the search engine accessing the related keyword database. At **508,** the associated information sources, i.e. their identifiers, are identified for each of the retrieved related keywords for the presence ones of the keywords of interest. In the earlier described embodiment this is performed by the search engine accessing the information source database.

At **510,** the information pages corresponding to the retrieved information source identifiers are pre-fetched. In one embodiment, this is performed by the browser itself. At **512,** the retrieved information pages are dithered to generate the thumbnails to have them available for use on demand. In the earlier described embodiment, this is performed by the add-on dither module.

While for ease of understanding, the method has been described with the operations being performed one after the other, first the unique nouns are determined, then the keywords of interest are determined, as so forth. Those skilled in the art will appreciate that in alternate embodiments, the various operations may be performed in an overlapped or interleaving manner. That is, as soon as a unique noun is determined, whether it is a keyword of interest may be determined, without awaiting all unique nouns to be determined. Likewise, once a keyword of interest is identified, its related keywords may be determined, without awaiting all keywords of interest to be identified. These principles apply equally to all the later operations.

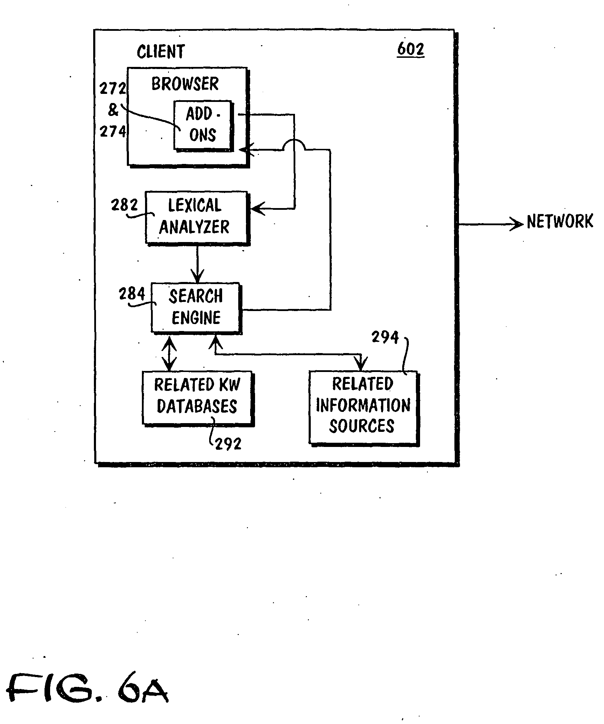

**Figures 6a-6d** illustrate four example network environments for practicing the present invention in accordance with four embodiments. The embodiment of **Fig. 6a** represents an embodiment, where all the relevant earlier described elements, i.e. add-on interface and dither modules 272 and **274,** lexical analyzer **282,** search engine **284,** and databases **292** and **294** are all provided to a client system 602 coupled to a network (e.g. the Internet). These relevant elements may be loaded onto client system **602** via a distribution medium (not shown) or downloaded from a distribution server (not shown). Note that a user may load/download only a subset of databases **292** and **294** tabulated by a vendor, or load/download them from multiple vendor sources.

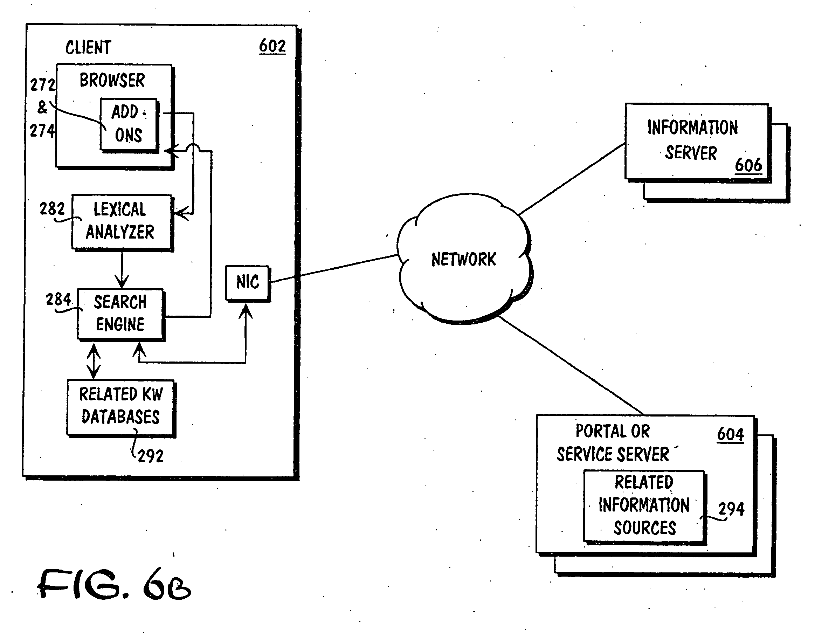

The embodiment of **Fig. 6b** represents an alternate embodiment, where except for information source database **294,** all other relevant earlier described elements, i.e. add-on interface and dither modules **272** and **274,** lexical analyzer **282,** search engine **284,** and databases **292** are provided to a client system **602** coupled to a network (e.g. the Internet). Information source database **294** is disposed on portal or service server **604** instead. During operation, upon determining the related keywords, search engine **284** would access database **294** remotely to retrieve the associated information source identifiers.

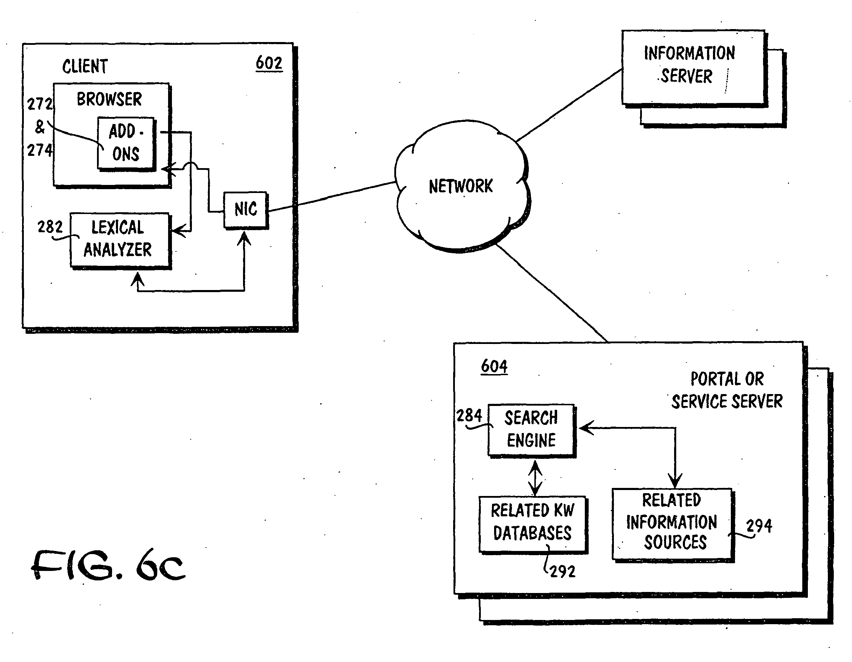

The embodiment of **Fig. 6c** represents yet another alternate embodiment, where only add-ons **272** and **274** and lexical analyzer **282** are provided to a client system **602** coupled to a network (e.g. the internet). Otherwise, search engine **284,** and databases **292** and **294** are disposed on portal or service server **604** instead. During operation, upon determining the unique nouns, lexical analyzer **282** would provide the unique nouns to search engine **284** on serer **604** instead. Search engine **284,** in turn determines the keywords of interest, their related keywords, and ultimately the associated information source identifiers, and provide them to client **602,** as described earlier.

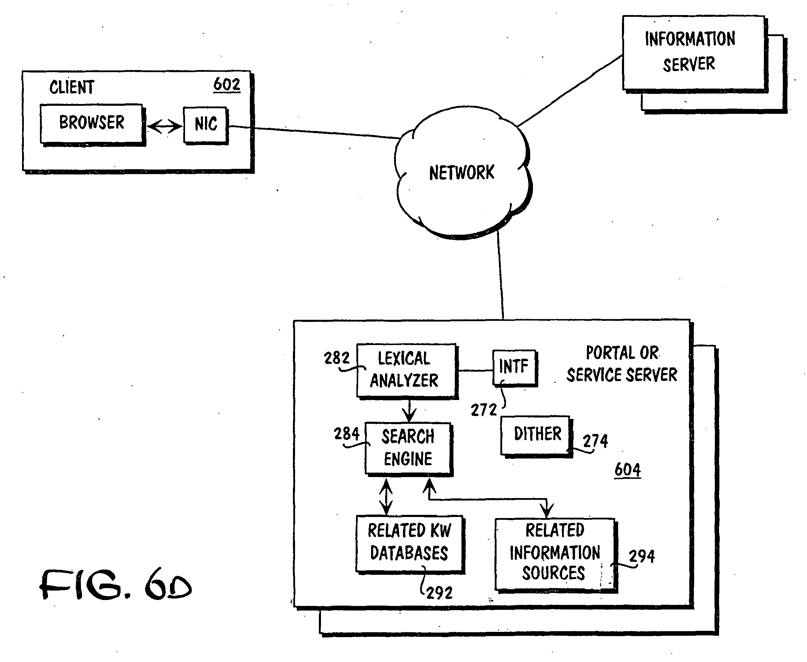

The embodiment of **Fig. 6d** represents yet another alternate embodiment, where all the relevant earlier described elements, i.e. interface and dither modules **272** and **274,** lexical analyzer **282,** search engine **284,** and databases **292** and **294** are all disposed on one or more portal or service server **604** instead. During operation, browser **100** would keep interface **272** informed of the identity of the information page being browsed (e.g. in the case of a web page, providing interface **272** with the web page's URL). Interface **272** causes server **604** to obtain its own copy of the information page. Therefore, lexical analyzer **282** and search engine, would all function (using databases **292** and **294**) as described earlier, leading to the eventual provision of the information source identifiers to client **602.**

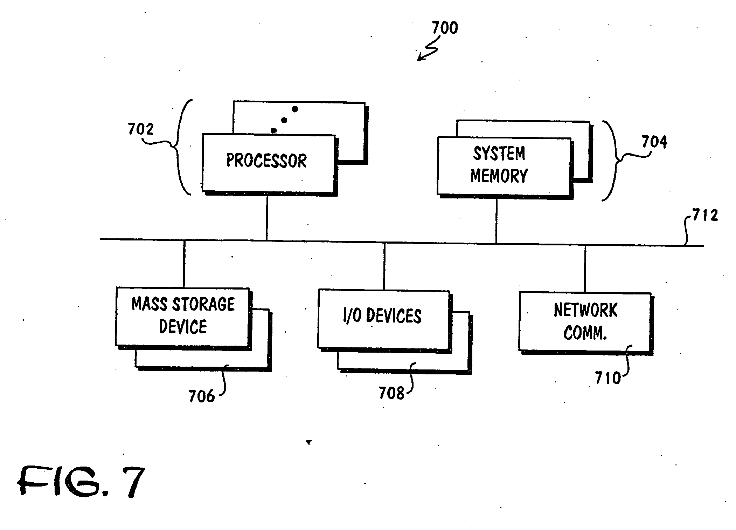

**Figure 7** illustrates one embodiment of an exemplary digital system suitable for use to practice the present invention, either as a client system or a server system. As a client system, digital system **700** may be a desktop computer system, a laptop computer system, a palm sized computing device, a set-top box, an Internet appliance and the like. As a server, digital system **700** may a single or a cluster of computer systems. As shown, exemplary digital system **700** includes one or more processors **702** and system memory **704.** Additionally, system **700** includes mass storage devices **706** (such as diskette, hard drive, CDROM and so forth), input/output devices **708** (such as keyboard, cursor control and so forth) and communication interfaces **710** (such as network interface cards, modems and so forth). The elements are coupled to each other via system bus **712,** which represents one or more buses. In the case of multiple buses, bridged by one or more bus bridges (not shown). Each of these elements perform its conventional functions known in the art. In particular, system memory **704** and mass storage **706** are employed to store a working copy and a permanent copy of the programming instructions implementing the teachings of the present invention. The permanent copy of the programming instructions may be loaded into mass storage **706** in the factory, or in the field, as described earlier, through a distribution medium (not shown) or through communication interface **710** (from a distribution server (not shown). The constitution of these elements **702-712** are known, and accordingly will not be further described.

Thus, a novel method and apparatus for dynamically assisting a user in information retrieval and browsing, based on the content of an information page has been described. While the present invention has been described in terms of the above illustrated embodiments, those skilled in the art will recognize that the invention is not.limited to the embodiments described. The present invention can be practiced with modification and alteration within the scope of the appended claims. The description is thus to be regarded as illustrative instead of restrictive on the present invention.

## Claims

1. An automated method performed in a client system (602) for assisting a user of the client system (602) in retrieving and browsing information, the method comprising:
retrieving, by the client system, and displaying on a display (110) of the client system (602) a first information page (108) responsive to user direction; and
additionally displaying on the first information page a plurality of dynamically assembled information source identifiers (106) identifying a plurality of information sources (328) for user selection, wherein the information source identifiers (106) are dynamically assembled, based at least in part on dynamically determined content of said first information page (108) as retrieved by the client system.

2. The method of claim 1, wherein said additional displaying comprises performing on said client system (602) in real time, analysis of the first information page (108) to determine presence of first keywords (306).

3. The method of claim 2, wherein said analysis comprises performing on said client system (602) in real time, scanning (502) of said first information page (108) for unique nouns presence, accessing a current table (302) of keywords on the client system (602) to determine (504) if any of the unique nouns are to be considered as keywords, and outputting those unique nouns that should be so considered as the presence ones of said first keywords (306).

4. The method of claim 3, wherein the method further comprises designating to a browser (100) of the client system (602) a first of a plurality of tables (302) of keywords on the client system (602) as the current table (302) of keywords of the client system (602).

5. The method of claim 4, wherein the method further comprises loading/downloading said plurality of tables (302) of keywords onto the client system (602).

6. The method of claim 2, wherein said additional displaying further comprises performing on said client system (602) in real time, retrieval of second keywords (308) related to the presence ones of first keywords (306) from one or more tables (304) of related keywords (308) on said client system (602), using said presence ones of first keywords (306).

7. The method of claim 1, wherein said additional displaying further comprises performing on said client system (602) in real time, retrieval of information source identifiers (106) identifying information sources (328) having information associated with the second keywords (308) from one or more information source tables (322) on said client system (602), using said second keywords (308).

8. The method of claim 7, wherein the method further comprises loading/downloading said one ore more tables (322) of information sources onto the client system (602).

9. The method of claim 1, wherein said additional displaying further comprises performing on the client system (602) in real time, assembly of the plurality of information source identifiers (106) dynamically identified based at least in part on presence ones of first keywords (306) in said information page (108).

10. The method of claim 1, wherein said additional displaying comprises performing on the client system (602) in real time, transmission to a server (604) a selected one of a locator of the first information page (108), a plurality of unique nouns of the first information page (108), a plurality of first keywords (306) present in the first information page (108), and a plurality of second keywords (308) related to the first keywords (306).

11. The method of claim 1, wherein said first information page (108) is an information page constituted using a mark-up language, and said information sources comprise servers serving information pages so constituted.

12. The method of claim 1, wherein the method further comprises additionally displaying on said display a thumbnail (112) of a second information page corresponding to a first of the identified information sources.

13. The method of claim 9 and 12, wherein said display of the thumbnail (112) is responsive to a user event.

14. The method of claim 12 or 13, wherein said additional displaying of a thumbnail (112) comprises performing on said client system (602) in real time, a selected one of retrieving said thumbnail (112) and retrieving said second information page and dithering said retrieved second information page to form said thumbnail (112).

15. The method of claim 12 or 13, wherein said additional displaying of a thumbnail (112) is made responsive to proximate placement of a cursor next to a first information source identifier corresponding to said first information source.

16. An automated method performed in a server system (604) for facilitating provision of assistance to a user of a networked client system (602) to retrieve and browse information, the method comprising:
receiving from said client system (602) dynamically determined unique nouns or dynamically determined presence ones of first keywords (306) in a first information page (108) being browsed on said client system (602); and
in response, providing to said client system (602) a plurality of information source identifiers (106) identifying a plurality information sources (328), based at least in part on said received presence ones of unique nouns / first keywords (306).

17. The method of claim 16, further comprising dynamically determining presence ones of first keywords (306) in said information page (108) using said received unique nouns; and said providing of information source identifiers (106) to said client system (602) is made based at least in part on said dynamically determined presence ones of first keywords (306).

18. The method of claim 16 or 17, wherein the method further comprises dynamically determining related second keywords (308) of said presence ones of first keywords (306); and said providing of information source identifiers (106) to said client system (602) is further made based at least in part on said dynamically determined related second keywords (308).

19. An automated method performed in a server system (604) for facilitating provision of assistance to a user of a networked client system (602) to retrieve and browse information, the method comprising:
receiving from said client system (602) a locator of a first information page (108) being browsed on said client system (602); and
in response, providing to said client system (602) a plurality of information source identifiers (106) identifying a plurality of information sources (328), based at least in part on dynamically determined content of the first information page (108).

20. The method of claim 19, wherein the method further comprises retrieving said first information page (108) and dynamically determining presence ones of first keywords (306) in said information page (108); and said providing of information source identifiers (106) to said client system (602) is made based at least in part on said dynamically determined presence ones of first keywords (306).

21. The method of claim 20, wherein the method further comprises dynamically determining related second keywords (308) of said presence ones of first keywords (306); and said providing of information source identifiers (106) to said client system (602) is further made based at least in part on said dynamically determined related second keywords (308).

22. The method of anyone of claims 16 to 21, wherein the method further comprises providing to said client system (602) a thumbnail (112) of a second information page corresponding to a first of said information source identifiers (106).

23. The method of claim 22, wherein the method further comprises retrieving said second information page and dithering said second information page to form said thumbnail (112).

24. A client system (602) comprising:
a browser (100) to facilitate viewing of a first retrieved information page (108); and
a keyword database (104, 292) coupled to the browser (100), having first plurality of keywords (306) to facilitate determination of presence ones of first keywords (306) in said first retrieved information page (108) being viewed,
**characterized in that** the keyword database has second plurality of keywords (308), the second keywords (308) being related to said first keywords (306) to facilitate determination of related second keywords (308) of said presence ones of first keywords (306), to facilitate augmented provision by said browser (100) a plurality of dynamically assembled information source identifiers (106) identifying a plurality of information sources (328) based at least in part on said related second keywords (308).

25. The client system (602) of claim 24, wherein the browser (100) is augmented with a lexical analyzer (282) to facilitate determination of unique nouns in said first retrieved information page (108) being browsed, for use in said determination of presence ones of first keywords (306) in said first retrieved information page (108) being browsed.

26. The client system (602) of claim 24, wherein the client system (602) further comprises an information source database (294) having said second keywords (308) and a plurality of associated information source identifiers (106) to facilitate said augmented provision of dynamically assembled information source identifiers (106) by said browser (100).

27. The client system (602) of claim 24, wherein the client system (602) further comprises a dithering module (274) to dither a second retrieved information page to generate a thumbnail (112) of the second retrieved information page.

28. A server system (604) comprising:
a network interface (272) to couple the server system (604) to a network;
an information source database (294) having a first plurality of keywords and a plurality of associated information source identifiers (106) to facilitate augmented provision by a browser (100) of a coupled client system (602) dynamically assembled information source identifiers (106), based at least in part on dynamically determined content of a first retrieved information page (108) being browsed on said client system (602).

29. The server system of claim 28, further comprising
a keyword database (292), having a second plurality of keywords (308) and said first plurality of keywords (306), the first keywords (306) being related to said second keywords (308) to facilitate determination of presence ones of first keywords (306) in said first retrieved information page (108) being viewed, and to facilitate determination of related second keywords (308) of said presence ones of first keywords (306) for use to perform said facilitation of augmented provision by said browser (100) of a plurality of dynamically assembled information source identifiers (106).

30. The server system (604) of claim 28, wherein the server system (604) further comprises a lexical analyzer (282) to facilitate determination of unique nouns in said first retrieved information page (108) being browsed, for use in said determination of presence ones of first keywords (306) in said first retrieved information page (108) being browsed.

31. The server system (604) of claim 28, wherein the server system (604) further comprises a dithering module (274) to dither a second retrieved information page to generate a thumbnail (112) of the second retrieved information page.

## Patentansprüche

1. Automatisiertes Verfahren, das in einem Client-System (602) zum Unterstützen eines Benutzers des Client-Systems (602) beim Abrufen und Browsen von Informationen ausgeführt wird, wobei das Verfahren Folgendes umfasst:
Abrufen einer ersten Informationsseite (108) durch das Client-System und Anzeigen dieser auf einem Display (110) des Client-Systems (602) als Reaktion auf Benutzeranweisung; und
zusätzliches Anzeigen mehrerer dynamisch zusammengestellter Informationsquellenkennungen (106) auf der ersten Informationsseite, die mehrere Informationsquellen (328) zur Benutzerauswahl identifizieren, wobei die Informationsquellenkennungen (106) dynamisch mindestens teilweise auf der Basis von dynamisch bestimmtem Inhalt der ersten Informationsseite (108) wie durch das Client-System abgerufen zusammengestellt werden.

2. Verfahren nach Anspruch 1, wobei das zusätzliche Anzeigen das Durchführen einer Analyse der ersten Informationsseite (108) auf dem Client-System (602) in Echtzeit umfasst, um die Anwesenheit von ersten schlüsselwörternn (306) zu bestimmen.

3. Verfahren nach Anspruch 2, wobei die Analyse Folgendes umfasst: Durchführen eines Scannens (502) der ersten Informationsseite (108) nach Anwesenheit einzigartiger Nomen auf dem Client-System (602) in Echtzeit, Zugreifen auf eine aktuelle Tabelle (302) von Schlüsselwörtern auf dem Client-System (602), um zu bestimmen (504), ob irgendwelche der einzigartigen Nomen als Schlüsselwörter zu betrachten sind, und Ausgeben derjenigen einzigartigen Nomen, die dergestalt betrachtet werden sollen, als die Anwesenden von ersten schlüsselwörtern (306).

4. Verfahren nach Anspruch 3, wobei das Verfahren ferner Folgendes umfasst: Designieren einer ersten von mehreren Tabellen (302) von Schlüsselwörtern auf dem Client-System (602) als die aktuelle Tabelle (302) von Schlüsselwörtern des Client-Systems (602) für einen Browser (100) des Client-Systems (602).

5. Verfahren nach Anspruch 4, wobei das Verfahren ferner das Laden/Herunterladen der mehreren Tabellen (302) von Schlüsselwörtern auf das Client-System (602) umfasst.

6. Verfahren nach Anspruch 2, wobei das zusätzliche Anzeigen ferner Folgendes umfasst: Durchführen eines Abrufs von zweiten Schlüsselwörtern (308), die mit den Anwesenden von ersten schlüsselwörtern (306) verwandt sind, aus einer oder mehreren Tabellen (304) von verwandten Schlüsselwörtern (308) auf dem Client-System (602) unter Verwendung der Anwesenden von ersten schlüsselwörtern (306) auf dem Client-System (602) in Echtzeit.

7. Verfahren nach Anspruch 1, wobei das zusätzliche Anzeigen ferner Folgendes umfasst: Durchführen eines Abrufs von Informationsquellenkennungen (106), die Informationsquellen (328) identifizieren, die mit den zweiten Schlüsselwörtern (308) assoziierte Informationen aufweisen, aus einer oder mehreren Informationsquellentabellen (322) auf dem Client-System (602) unter Verwendung der zweiten Schlüsselwörter (308) auf dem Client-System (602) in Echtzeit.

8. Verfahren nach Anspruch 7, wobei das Verfahren ferner das Laden/Herunterladen der einen oder mehreren Tabellen (322) von Informationsquellen auf das Client-System (602) umfasst.

9. Verfahren nach Anspruch 1, wobei das zusätzliche Anzeigen ferner Folgendes umfasst: Durchführen einer Zusammenstellung der mehreren Informationsquellenkennungen (106), die dynamisch mindestens teilweise auf der Basis von Anwesenden von ersten schlüsselwörtern (306) in der Informationsseite (108) identifiziert werden, auf dem Client-System (602) in Echtzeit.

10. Verfahren nach Anspruch 1, wobei das zusätzliche Anzeigen das Durchführen einer Übertragung einer gewählten der folgenden Alternativen zu einem Server (604) auf dem Client-System (602) in Echtzeit umfasst: eines Lokalisierers der ersten Informationsseite (108), mehrerer einzigartiger Nomen der ersten Informationsseite (108), mehrerer in der ersten Informationsseite (108) anwesender erster Schlüsselwörter (306) und mehrerer mit den ersten schlüsselwörternn (306) verwandter zweiter Schlüsselwörter (308).

11. Verfahren nach Anspruch 1, wobei die erste Informationsseite (108) eine unter Verwendung einer Markup-Sprache gebildete Informationsseite ist und die Informationsquellen Server umfassen, die mit so gebildeten Informationsseiten versorgen.

12. Verfahren nach Anspruch 1, wobei das Verfahren ferner das zusätzliche Anzeigen eines Miniaturbildes (112) einer zweiten Informationsseite, die einer ersten der identifizierten Informationsquellen entspricht, auf dem Display umfasst.

13. Verfahren nach Anspruch 9 und 12, wobei die Anzeige des Miniaturbildes (112) als Reaktion auf ein Benutzerereignis erfolgt.

14. Verfahren nach Anspruch 12 oder 13, wobei das zusätzliche Anzeigen eines Miniaturbildes (112) das Durchführen einer gewählten der folgenden Alternativen auf dem Client-System (602) in Echtzeit umfasst: Abrufen des Miniaturbildes (112) und Abrufen der zweiten Informationsseite und Dithern der abgerufenen zweiten Informationsseite, um das Miniaturbild (112) zu bilden.

15. Verfahren nach Anspruch 12 oder 13, wobei das zusätzliche Anzeigen eines Miniaturbildes (112) als Reaktion auf eine annähernde Platzierung eines Cursors neben einer ersten Informationsquellenkennung, die der ersten Informationsquelle entspricht, ausgeführt wird.

16. Automatisiertes Verfahren, das in einem Serversystem (604) zur Ermöglichung der Bereitstellung von Unterstützung für einen Benutzer eines vernetzten Client-Systems (602) zum Abrufen und Browsen von Informationen ausgeführt wird, wobei das Verfahren Folgendes umfasst:
Empfangen von dynamisch bestimmten einzigartigen Nomen oder dynamisch bestimmten Anwesenden von ersten schlüsselwörternn (306) in einer ersten Informationsseite (108), auf der auf dem Client-System (602) gebrowst wird, von dem Client-System (602); und
Bereitstellen mehrerer Informationsquellenkennungen (106) für das Client-System (602) als Reaktion, die mehrere Informationsquellen (328) identifizieren, mindestens teilweise auf der Basis der empfangenen Anwesenden von einzigartigen Nomen/ersten schlüsselwörternn (306).

17. Verfahren nach Anspruch 16, das ferner das dynamische Bestimmen von Anwesenden von ersten schlüsselwörternn (306) in der Informationsseite (108) unter Verwendung der empfangenen einzigartigen Nomen umfasst; und wobei das Bereitstellen von Informationsquellenkennungen (106) für das Client-System (602) mindestens teilweise auf der Basis der dynamisch bestimmten Anwesenden von ersten schlüsselwörtern (306) ausgeführt wird.

18. Verfahren nach Anspruch 16 oder 17, wobei das Verfahren ferner das dynamische Bestimmen von verwandten zweiten Schlüsselwörtern (308) der Anwesenden von ersten schlüsselwörtern (306) umfasst; und das Bereitstellen von Informationsquellenkennungen (106) für das Client-System (602) ferner mindestens teilweise auf der Basis der dynamisch bestimmten verwandten zweiten Schlüsselwörter (308) ausgeführt wird.

19. Automatisiertes Verfahren, das in einem Serversystem (604) zur Ermöglichung der Bereitstellung von Unterstützung für einen Benutzer eines vernetzten Client-Systems (602) zum Abrufen und Browsen von Informationen ausgeführt wird, wobei das Verfahren Folgendes umfasst:
Empfangen eines Lokalisierers einer ersten Informationsseite (108), auf der auf dem Client-System (602) gebrowst wird, von dem Client-System (602); und
Bereitstellen mehrerer Informationsquellenkennungen (106) für das Client-System (602) als Reaktion, die mehrere Informationsquellen (328) identifizieren, mindestens teilweise auf der Basis von dynamisch bestimmtem Inhalt der ersten Informationsseite (108).

20. Verfahren nach Anspruch 19, wobei das Verfahren ferner das Abrufen der ersten Informationsseite (108) und das dynamische Bestimmen von Anwesenden von ersten schlüsselwörternn (306) in der Informationsseite (108) umfasst; und das Bereitstellen von Informationsquellenkennungen (106) für das Client-System (602) mindestens teilweise auf der Basis der dynamisch bestimmten Anwesenden von ersten schlüsselwörtern (306) ausgeführt wird.

21. Verfahren nach Anspruch 20, wobei das Verfahren ferner das dynamische Bestimmen von verwandten zweiten Schlüsselwörtern (308) der Anwesenden von ersten schlüsselwörternn (306) umfasst; und das Bereitstellen von Informationsquellenkennungen (106) für das Client-System (602) ferner mindestens teilweise auf der Basis der dynamisch bestimmten verwandten zweiten Schlüsselwörter (308) ausgeführt wird.

22. Verfahren nach einem der Ansprüche 16 bis 21, wobei das Verfahren ferner Folgendes umfasst: Bereitstellen eines Miniaturbildes (112) einer zweiten Informationsseite, die einer ersten der Informationsquellenkennungen (106) entspricht, für das Client-System (602).

23. Verfahren nach Anspruch 22, wobei das Verfahren ferner Folgendes umfasst: Abrufen der zweiten Informationsseite und Dithern der zweiten Informationsseite, um das Miniaturbild (112) zu bilden.

24. Client-System (602), umfassend:
einen Browser (100) zum Ermöglichen des Betrachtens einer ersten abgerufenen Informationsseite (108); und
eine mit dem Browser (100) gekoppelte Schlüsselwortdatenbank (104, 292), die mehrere erste Schlüsselwörter (306) zur Ermöglichung der Bestimmung von Anwesenden von ersten schlüsselwörtern (306) in der ersten abgerufenen Informationsseite (108), die betrachtet wird, aufweist,
**dadurch gekennzeichnet, dass** die Schlüsselwortdatenbank mehrere zweite Schlüsselwörter (308) aufweist, wobei die zweiten Schlüsselwörter (308) mit den ersten schlüsselwörternn (306) verwandt sind, um die Bestimmung von verwandten zweiten Schlüsselwörtern (308) der Anwesenden von ersten schlüsselwörtern (306) zu ermöglichen, um ergänzte Bereitstellung mehrerer dynamisch zusammengestellter Informationsquellenkennungen (106) durch den Browser (100), die mehrere Informationsquellen (328) identifizieren, mindestens teilweise auf der Basis der verwandten zweiten Schlüsselwörter (308) zu ermöglichen.

25. Client-System (602) nach Anspruch 24, wobei der Browser (100) mit einem lexikalischen Analysator (282) ergänzt wird, um die Bestimmung von einzigartigen Nomen in der ersten abgerufenen Informationsseite (108), auf der gebrowst wird, zur Verwendung bei der Bestimmung von Anwesenden von ersten schlüsselwörtern (306) in der ersten abgerufenen Informationsseite (108), auf der gebrowst wird, zu ermöglichen.

26. Client-System (602) nach Anspruch 24, wobei das Client-System (602) ferner Folgendes umfasst: eine Informationsquellendatenbank (294), die die zweiten Schlüsselwörter (308) und mehrere assoziierte Informationsquellenkennungen (106) aufweist, um die ergänzte Bereitstellung von dynamisch zusammengestellten Informationsquellenkennungen (106) durch den Browser (100) zu ermöglichen.

27. Client-System (602) nach Anspruch 24, wobei das Client-System (602) ferner ein Dithermodul (274) umfasst, um eine zweite abgerufene Informationsseite zu dithern, um ein Miniaturbild (112) der zweiten abgerufenen Informationsseite zu erzeugen.

28. Serversystem (604), umfassend:
eine Netzwerkschnittstelle (272), um das Serversystem (604) mit einem Netzwerk zu koppeln;
eine Informationsquellendatenbank (294), die mehrere erste Schlüsselwörter und mehrere assoziierte Informationsquellenkennungen (106) aufweist, um ergänzte Bereitstellung von dynamisch zusammengestellten Informationsquellenkennungen (106) durch einen Browser (100) eines gekoppelten Client-Systems (602) mindestens teilweise auf der Basis von dynamisch bestimmtem Inhalt einer ersten abgerufenen Informationsseite (108), auf der auf dem Client-System (602) gebrowst wird, zu ermöglichen.

29. Serversystem nach Anspruch 28, ferner umfassend:
eine Schlüsselwortdatenbank (292), die mehrere zweite Schlüsselwörter (308) und die mehreren ersten schlüsselwörtern (306) aufweist, wobei die ersten schlüsselwörtern (306) mit den zweiten Schlüsselwörtern (308) verwandt sind, um die Bestimmung von Anwesenden von ersten schlüsselwörtern (306) in der ersten abgerufenen Informationsseite (108), die betrachtet wird, zu ermöglichen und um die Bestimmung von verwandten zweiten Schlüsselwörtern (308) der Anwesenden von ersten schlüsselwörtern (306) zur Verwendung, um die Ermöglichung von ergänzter Bereitstellung mehrerer dynamisch zusammengestellter Informationsquellenkennungen (106) durch den Browser (100) durchzuführen, zu ermöglichen.

30. Serversystem (604) nach Anspruch 28, wobei das Serversystem (604) ferner einen lexikalischen Analysator (282) umfasst, um die Bestimmung von einzigartigen Nomen in der ersten abgerufenen Informationsseite (108), auf der gebrowst wird, zur Verwendung bei der Bestimmung von Anwesenden von ersten schlüsselwörtern (306) in der ersten abgerufenen Informationsseite (108), auf der gebrowst wird, zu ermöglichen.

31. Serversystem (604) nach Anspruch 28, wobei das Serversystem (604) ferner ein Dithermodul (274) umfasst, um eine zweite abgerufene Informationsseite zu dithern, um ein Miniaturbild (112) der zweiten abgerufenen Informationsseite zu erzeugen.

## Revendications

1. Procédé automatisé exécuté dans un système client (602) pour assister un utilisateur du système client (602) pour la récupération des informations et pour y naviguer, le procédé comprenant :
la récupération par le système client et l'affichage sur un affichage (110) du système client (602) d'une première page d'informations (108) en réponse aux directives de l'utilisateur ; et
l'affichage supplémentaire sur la première page d'informations, d'une pluralité d'identificateurs de sources d'informations (106) assemblés dynamiquement, identifiant une pluralité de sources d'informations (328) au choix de l'utilisateur, dans lesquelles les identificateurs de sources d'informations (106) sont assemblés dynamiquement, en se fondant au moins partiellement sur le contenu déterminé dynamiquement de ladite première page d'informations (108) tel qu'il a été récupéré par le système client.

2. Le procédé de la revendication 1, dans lequel ledit affichage supplémentaire comprend l'exécution en temps réel sur ledit système client (602), de l'analyse de la première page d'informations (108) pour déterminer la présence des premiers mots-clés (306).

3. Le procédé de la revendication 2, dans lequel ladite analyse comprend l'exécution en temps réel sur ledit système client (602) du balayage (502) de ladite première page d'informations (108) pour chercher la présence de noms uniques, l'accès à une table actuelle (302) de mots-clés sur le système client (602) pour déterminer (504) si quelques-uns des noms uniques doivent être considérés comme des mots-clés, et la fourniture en sortie de ces noms uniques qui devraient ainsi être considérés comme la présence de dits premiers mots-clés (306).

4. Le procédé de la revendication 3, dans lequel le procédé comprend de plus la désignation à un navigateur (100) du système client (602) d'une première table d'une pluralité de tables (302) de mots-clés du système client (602) comme étant la table actuelle (302) de mots-clés du système client (602).

5. Le procédé de la revendication 4, dans lequel le procédé comprend de plus le chargement / téléchargement de ladite pluralité de tables (302) de mots-clés sur le système client (602).

6. Le procédé de la revendication 2, dans lequel ledit affichage supplémentaire comprend de plus l'exécution en temps réel sur le système client (602), la récupération des seconds mots-clés (308) correspondant à la présence de premiers mots-clés (306) à partir d'une ou de plusieurs tables (304) de mots-clés (308) correspondants sur ledit système client (602), en utilisant ladite présence de premiers mots-clés (306).

7. Le procédé de la revendication 1, dans lequel ledit affichage supplémentaire comprend de plus l'exécution en temps réel sur le système client (602), de la récupération des identificateurs de sources d'informations (106) identifiant les sources d'informations (328) ayant des informations associées aux seconds mots-clés (308) provenant d'une ou de plusieurs tables de sources d'informations (322) sur ledit système client (602), en utilisant lesdits seconds mots-clés (308).

8. Le procédé de la revendication 7, dans lequel le procédé comprend de plus le chargement / téléchargement de ladite ou desdites tables (322) de sources d'informations sur le système client (602).

9. Le procédé de la revendication 1, dans lequel ledit affichage supplémentaire comprend de plus l'exécution en temps réel sur le système client (602), de l'assemblage de la pluralité d'identificateurs de sources d'informations (106) identifiés dynamiquement en se fondant au moins partiellement sur la présence de premiers mots-clés (306) dans ladite page d'informations (108).

10. Le procédé de la revendication 1, dans lequel ledit affichage supplémentaire comprend l'exécution en temps réel sur le système client (602), de la transmission vers un serveur (604) d'une balise choisie de la première page d'informations (108), d'une pluralité de noms uniques de la première page d'informations (108), d'une pluralité de premiers mots-clés (306) présents dans la première page d'informations (108), et d'une pluralité de seconds mots-clés (308) correspondant aux premiers mots-clés (306).

11. Le procédé de la revendication 1, dans lequel ladite première page d'informations (108) est une page d'informations constituée en utilisant un langage de balisage, et lesdites sources d'informations comprennent des serveurs servant les pages d'informations ainsi constituées.

12. Le procédé de la revendication 1, dans lequel le procédé comprend de plus l'affichage sur ledit affichage d'une vignette (112) d'une seconde page d'informations correspondant à une première des sources d'informations identifiées.

13. Le procédé des revendications 9 et 12, dans lequel ledit affichage d'une vignette (112) répond à un événement utilisateur.

14. Le procédé de la revendication 12 ou 13, dans lequel ledit affichage supplémentaire d'une vignette (112) comprend l'exécution en temps réel sur le système client (602) d'une vignette choisie, de la récupération de ladite vignette (112) et la récupération de ladite seconde page d'informations et la juxtaposition de ladite seconde page d'informations récupérée pour former ladite vignette (112).

15. Le procédé de la revendication 12 ou 13, dans lequel ledit affichage supplémentaire d'une vignette (112) est rendu sensible au placement proche d'un curseur à proximité d'un premier identificateur de source d'informations correspondant à ladite première source d'informations.

16. Procédé automatisé exécuté dans un système serveur (604) pour faciliter la prestation d'assistance à un utilisateur d'un système client réseau (602) pour retrouver des informations et y naviguer, le procédé comprenant :
la réception à partir du système client (602) de noms uniques déterminés dynamiquement ou de la présence déterminée dynamiquement de premiers mots-clés (306) présents dans une première page d'informations (108) sur laquelle on navigue dans ledit système client (602) ; et
en réponse, la fourniture audit système client (602) d'une pluralité d'identificateurs de sources d'informations (106) identifiant une pluralité de sources d'informations (328), fondée au moins partiellement sur la présence de dits premiers reçus parmi les noms uniques / premiers mots-clés (306).

17. Le procédé de la revendication 16, comprenant de plus la détermination dynamique de la présence de premiers mots-clés (306) dans ladite page d'informations (108) utilisant lesdits noms uniques reçus ; et ladite fourniture d'identificateurs de sources d'informations (106) audit système client (602) est effectuée en se fondant au moins partiellement sur la présence déterminée dynamiquement de premiers mots-clés (306).

18. Le procédé de la revendication 16 ou 17, dans lequel le procédé comprend de plus la détermination dynamique des seconds mots-clés (308) correspondant à ladite présence de premiers mots-clés (306) ; et ladite fourniture d'identificateurs de sources d'informations (106) audit système client (602) est de plus effectuée en se fondant au moins partiellement sur lesdits seconds mots-clés (308) correspondants déterminés dynamiquement.

19. Procédé automatisé exécuté dans un système serveur (604) pour faciliter la prestation d'assistance à un utilisateur d'un système client réseau (602) pour retrouver des informations et y naviguer, le procédé comprenant :
la réception à partir du système client (602) d'une balise d'une première page d'informations (108) sur laquelle on navigue dans ledit système client (602) ; et
en réponse, la fourniture audit système client (602) d'une pluralité d'identificateurs de sources d'informations (106) identifiant une pluralité de sources d'informations (328), fondée au moins partiellement sur le contenu déterminé dynamiquement de la première page d'informations (108).

20. Le procédé de la revendication 19, dans lequel le procédé comprend de plus la récupération de ladite première page d'informations (108) et la détermination dynamique de la présence de premiers mots-clés (306) dans ladite page d'informations (108) ; et ladite fourniture d'identificateurs de sources d'informations (106) audit système client (602) est effectuée en se fondant au moins partiellement sur ladite présence déterminée dynamiquement de premiers mots-clés (306).

21. Le procédé de la revendication 20, dans lequel le procédé comprend de plus la détermination dynamique des seconds mots-clés (308) correspondant à ladite présence de premiers mots-clés (306) ; et ladite fourniture d'identificateurs de sources d'informations (106) audit système client (602) est de plus effectuée en se fondant au moins partiellement sur lesdits seconds mots-clés (308) correspondants déterminés dynamiquement.

22. Le procédé d'une quelconque des revendications 16 à 21, dans lequel le procédé comprend de plus la fourniture audit système client (602) d'une vignette (112) d'une seconde page d'informations correspondant à une première desdits identificateurs de sources d'informations (106).

23. Le procédé de la revendication 22, dans lequel le procédé comprend de plus la récupération de ladite seconde page d'informations et la juxtaposition de ladite seconde page d'informations pour former ladite vignette (112).

24. Système client (602) comprenant :
un navigateur (100) pour faciliter l'observation d'une première page d'informations (108) ; et
une base de données de mots-clés (104, 292) couplée au navigateur (100), ayant une première pluralité de mots-clés (306) pour faciliter la détermination de la présence de premiers mots-clés (306) dans ladite première page d'informations récupérée (108) qui est observée,
**caractérisé en ce que** la base de données de mots-clés possède une seconde pluralité de mots-clés (308), les seconds mots-clés (308) étant liés auxdits premiers mots-clés (306) pour faciliter la détermination des seconds mots-clés (308) correspondants de ladite présence de premiers mots-clés (306), pour faciliter l'augmentation de la fourniture par ledit navigateur (100) d'une pluralité d'identificateurs de sources d'informations (106) assemblés dynamiquement, identifiant une pluralité de sources d'informations (328) fondée au moins partiellement sur lesdits seconds mots-clés (308) correspondants.

25. Le système client (602) de la revendication 24, dans lequel le navigateur (100) est augmenté d'un analyseur lexical (282) pour faciliter la détermination de noms uniques dans ladite première page d'informations récupérée (108) dans laquelle on navigue, pour utiliser dans ladite détermination de présence de premiers mots-clés (306) dans ladite première page d'informations récupérée (108) dans laquelle on navigue.

26. Le système client (602) de la revendication 24, dans lequel le système client (602) comprend de plus une base de données de sources d'informations (294) ayant lesdits seconds mots-clés (308) et une pluralité d'identificateurs de sources d'informations (106) associés pour faciliter ladite augmentation de la fourniture par ledit navigateur (100) d'identificateurs de sources d'informations (106) assemblés dynamiquement.

27. Le système client (602) de la revendication 24, dans lequel le système client (602) comprend de plus un module de juxtaposition (274) pour juxtaposer une seconde page d'informations récupérée pour générer une vignette (112) de la seconde page d'informations récupérée.

28. Système serveur (604) comprenant :
une interface réseau (272) pour coupler le système serveur (604) à un réseau ;
une base de données (294) de sources d'informations ayant une première pluralité de mots-clés et une pluralité d'identificateurs de sources d'informations (106) associée pour faciliter l'augmentation de la fourniture par un navigateur (100) d'un système client couplé (602), des identificateurs de sources d'informations (106) assemblés dynamiquement, fondés au moins partiellement sur le contenu déterminé dynamiquement d'une première page d'informations (108) récupérée dans laquelle on navigue sur ledit système client (602).

29. Le système serveur de la revendication 28 comprenant de plus :
une base de données de mots-clés (292) ayant une seconde pluralité de mots-clés (308) et ladite première pluralité de mots-clés (306), les premiers mots-clés (306) étant liés auxdits seconds mots-clés (308) pour faciliter la détermination de la présence de premiers mots-clés (306) dans ladite première page d'informations récupérée (108) qui est observée, et pour faciliter la détermination des seconds mots-clés (308) correspondants de ladite présence de premiers mots-clés (306) utilisée pour faciliter ladite augmentation de la fourniture par ledit navigateur (100) d'une pluralité d'identificateurs de sources d'informations (106) assemblés dynamiquement.

30. Le système serveur (604) de la revendication 28 dans lequel le système serveur (604) comprend de plus un analyseur lexical (282) pour faciliter la détermination de noms uniques dans ladite première page d'informations récupérée (108) dans laquelle on navigue, pour l'utilisation dans ladite détermination de présence des premiers mots-clés (306) dans ladite première page d'informations récupérée (108) dans laquelle on navigue.

31. Le système serveur (604) de la revendication 28 dans lequel le système serveur (604) comprend de plus un module de juxtaposition (274) pour juxtaposer une seconde page d'informations récupérée pour générer une vignette (112) de la seconde page d'informations récupérée.
